# EUROPEAN PATENT SPECIFICATION

(11) **EP 3 179 348 B1**
(45) Date of publication and mention of the grant of the patent: **23.02.2022**
(21) Application number: 16202737.9
(22) Date of filing: 07.12.2016
(51) Int. Cl.: G06F 3/041, G06F 3/01

(54) **TOUCH DEVICE PROVIDING TACTILE FEEDBACK**
BERÜHRUNGSEMPFINDLICHE VORRICHTUNG MIT BEREITSTELLUNG VON TAKTILER RÜCKKOPPELUNG
DISPOSITIF TACTILE PERMETTANT UNE RÉTROACTION TACTILE

(30) Priority: 10.12.2015 JP 2015241202
(43) Date of publication of application: 14.06.2017
(73) Proprietor: KABUSHIKI KAISHA TOKAI RIKA DENKI SEISAKUSHO, Niwa-gun, Aichi 480-0195 (JP)
(72) Inventor: Miyata, Ikuko, Aichi, 480-0195 (JP)
(74) Representative: Betten & Resch

(56) References cited:
- WO-A1-2015/020284
- DE-U1-202015 005 999
- JP-A- 2013 109 636
- US-A1- 2014 002 386
- US-A1- 2015 291 032

## Description

The present application is based on Japanese patent application No.2015-241202 filed on December 10, 2015.

### Technical Field

The present invention relates to a vibration presentation device.

### Background Art

In the conventional art, an input device is known that includes an electrostatic capacitance touch panel configured to output a touch detection signal when an electrostatic capacitance value increases via contact by an input means and exceeds a predetermined threshold, an acceleration sensor configured to detect and output acceleration applied to the touch panel via contact by the input means, and a controller configured to determine the presence or absence of contact by the input means via the output of the acceleration sensor (see for example Patent Document 1).

This input device can detect contact with the touch panel by the input means via the acceleration sensor. [insert page 1a]

### Citation List

### Patent Literature

Patent Document 1: Japanese Unexamined Patent Application Publication No. 2013-109636A

### Summary of Invention

### Technical Problem

US 2014/002386 A1 discloses a haptic feedback planar touch control used to provide input to a computer. A touch input device includes a planar touch surface that inputs a position signal to a processor of the computer based on a location of user contact on the touch surface. The computer can position a cursor in a displayed graphical environment based at least in part on the position signal, or perform a different function. At least one actuator is also coupled to the touch input device and outputs a force to provide a haptic sensation to the user contacting the touch surface. The touch input device can be a touchpad separate from the computer's display screen, or can be a touch screen. Output haptic sensations on the touch input device can include pulses, vibrations, and spatial textures. The touch input device can include multiple different regions to control different computer functions.

DE 20 2015 005999 U1 (WO 2016/032806 A4) discloses systems and processes for limiting notifications on an electronic device. In one example process, data representing a user input can be received by an electronic device. The data representing the user input can include touch data from the touch-sensitive device, ambient light data from an ambient light sensor, intensity data from a contact intensity sensor, and/or motion data from one or more motion sensors. Based on the data, it can be determined whether the user input is a cover gesture over a touch-sensitive display of the electronic device. In response to determining that the user input is a cover gesture over the touch-sensitive display, the electronic device can be put into a DND mode for a predetermined amount of time. While in the DND mode, the electronic device can cease to output some or all notifications.

WO 2015/020284 A1 discloses a terminal with an acceleration sensor used for sensing a tap knocking of a body portion when the other sensors / actuators are disabled. The terminal further includes a haptic feedback module which is able to generate vibrations and a touch screen.

To-date, electronic devices are known that present vibrations to the operator through vibrations applied to the operating surface acting as operation feedback. In conventional touch panels that detect contact with the operating surface via an acceleration sensor, acceleration is detected while the vibrations are presented. This can lead to a false determination of operations associated with multiple contacts such as a double tap.

An object of the present invention is to provide a vibration presentation device with which occurrences of false determination of operations can be reduced.

### Solution to Problem

The solution to the above mentioned problem can be found in the independent device claim 1. Further advantageous solutions are provided by the dependent claims 2 and 3.

### Advantageous Effects of Invention

According to the present invention, occurrences of false determination of operations can be reduced.

### Brief Description of Drawings

FIG. 1A is a schematic view of an example of a vehicle interior provided with a touch pad according to an embodiment.
FIG. 1B illustrates is an example of a block diagram of the touch pad.
FIG. 2A is a side view of an example of the configuration of the touch pad according to the embodiment.
FIG. 2B is a schematic view of an example of an icon and cursor displayed on a display device.
FIG. 2C is a graph showing examples of a vibration instruction signal, a drive signal, a displacement amount, and acceleration.
FIG. 3 is a flowchart illustrating an example of operations of the touch pad according to the embodiment.

### Description of Embodiments

### Overview of Embodiments

A vibration presentation device according to the embodiments primarily includes a detector configured to detect a tracing operation performed on an operating surface, a vibration applier configured to apply vibrations to the operating surface, an acceleration detector configured to detect acceleration associated with displacement of the operating surface, and a controller configured to discard a value of acceleration detected by the acceleration detector during a period of vibration application in which the controller controls the vibration applier to apply vibrations to the operating surface.

The vibration presentation device discards the value of acceleration detected during the period of vibration application. Such a configuration can reduce occurrences of false determination caused by vibrations applied to the operating surface as operational vibrations compared to a configuration without such a vibration presentation device.

### Embodiments

### General Description of Touch Pad 1

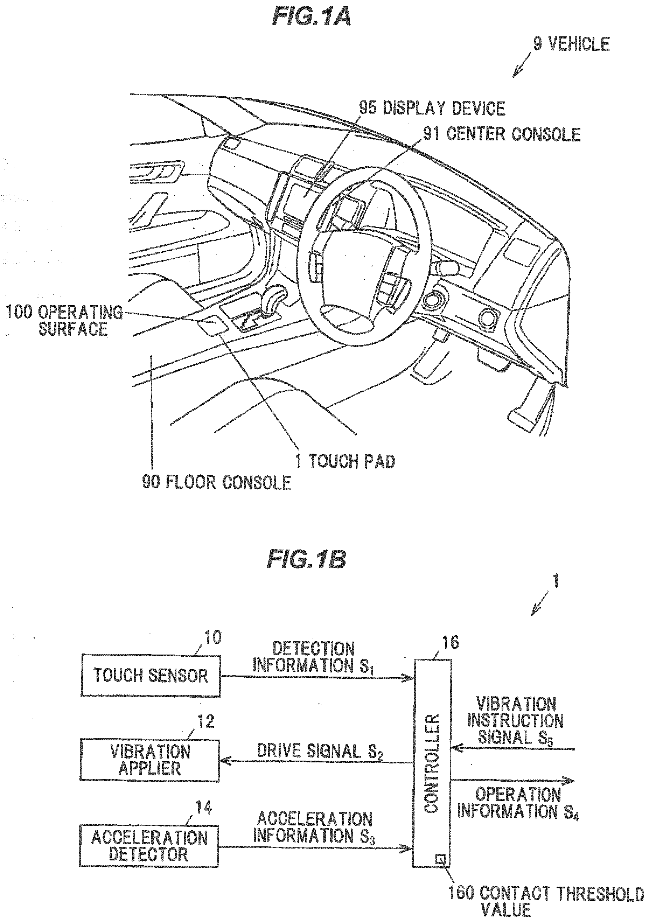

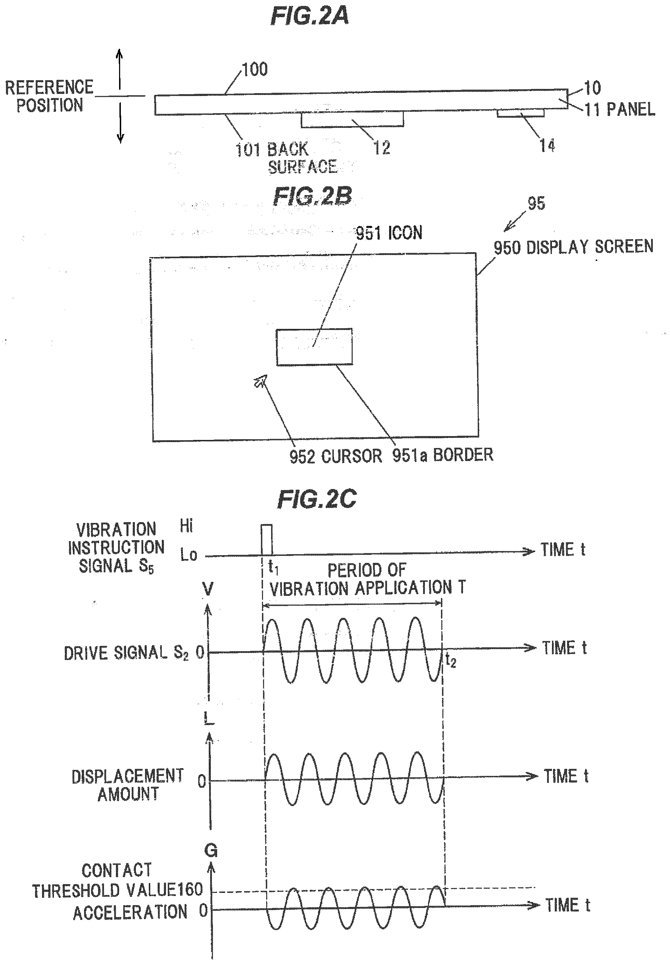

FIG. 1A is a schematic view of an example of a vehicle interior provided with a touch pad according to an embodiment. FIG. 1B illustrates an example of a block diagram of the touch pad. FIG. 2A is a side view of an example of the configuration of the touch pad according to the embodiment. FIG. 2B is a schematic view of an example of an icon and cursor displayed on a display device. FIG. 2C is a graph showing examples of a vibration instruction signal, a drive signal, a displacement amount, and acceleration. In FIG. 2C, the horizontal axis is time t. Additionally, in FIG. 2C, the vertical axis of the vibration instruction signal S₅ is Hi and Lo. The vertical axis of the drive signal S₂ is a drive voltage V. The vertical axis of the displacement amount is a displacement amount L from a reference position. The vertical axis of acceleration is detected acceleration G. In the drawings associated with the following embodiments, ratios between elements in the drawings maybe different from the actual ratios. Additionally, in FIG. 1B, arrows indicate the flows of primary signals, information, and the like.

A touch pad 1 serving as a vibration presentation device is disposed in a floor console 90 that extends between a driver's seat and a passenger's seat of a vehicle 9, as illustrated in FIG. 1A, for example. The touch pad 1 functions as a remote operation unit for operating electronic devices installed in the vehicle 9. An operating surface 100 of the touch pad 1 is exposed from the floor console 90.

Examples of electronic devices include navigation devices, air conditioning devices, music playback devices, video playback devices, and the like. A display device 95 disposed in a center console 91 functions as a display for these electronic devices.

The touch pad 1, as illustrated in FIG. 1B and FIG. 2A, primarily includes a touch sensor 10 serving as a detector configured to detect tracing operations performed on the operating surface 100, a vibration applier 12 configured to apply vibrations to the operating surface 100, an acceleration detector 14 configured to detect acceleration associated with displacement of the operating surface 100, and a controller 16 configured to discard a value of acceleration detected by the acceleration detector 14 during a period of vibration application in which the controller 16 controls the vibration applier 12 to apply vibrations to the operating surface 100.

The touch sensor 10 detects tracing operations, touch operations, tap operations, double tap operations, flick operations, drag operations, pinch-in operations, pinch-out operations, and the like. Additionally, "value of acceleration" is referred to below as "acceleration value".

The touch pad 1 as illustrated in FIG. 2B, for example, is configured so that, upon a cursor 952 reaching a border 951a of an icon 951 displayed on a display screen 950 of the display device 95, the touch pad 1 causes the operating surface 100 to vibrate so as to present feedback on the operation.

The operator feels this vibrations through an operating finger, thus being able to know that the icon 951 becomes selectable without looking at the display screen 950.

### Configuration of Touch Sensor 10

The touch sensor 10, for example, is configured so that instructions such as movement of the cursor displayed on the display device 95 and selection, confirmation, dragging, dropping of the displayed icon can be performed by operations by a pen or operating finger having electrical conductivity. Below, the detection target of the touch sensor 10 is taken to be an operating finger.

The touch sensor can be an infrared type or electrostatic capacitive type sensor and is at least able to detect tap operations.

The touch sensor 10 according to the present embodiment, for example, is an electrostatic capacitance type touch sensor configured to detect electrostatic capacitance between a detection electrode and an operating finger when the operating finger comes close to the operating surface 100. The detection electrode, for example, is disposed immediately below the operating surface 100 and is insulated in a first direction and a second direction that intersects the first direction.

The touch sensor 10, for example, calculates a detection point on the operating surface 100 where the operating finger has been detected from the detected electrostatic capacitance, generates detection information S₁ that includes information on the coordinates of the detection point, and outputs the detection information S₁ to the controller 16.

Note that the touch sensor 10, for example, if the electrostatic capacitance reaches or goes beyond the threshold value, calculates the detection point where the operating finger has been detected, but does not determine whether the operating finger is in contact with the operating surface 100. The determination as to contact is performed by the controller 16 on the basis of an acceleration value detected by the acceleration detector 14. The controller 16 determines that an operation has been performed by taking into account the detection result of the operating finger and the determination as to contact with the operating surface 100 based on the acceleration value.

The touch sensor 10, as illustrated in FIG. 2A for example, includes a plate-like panel 11. The front surface of the panel 11 corresponds to the operating surface 100. The detection electrode and the like described above are disposed on the back surface 101 side of the panel 11.

### Configuration of Vibration Applier 12

Specifically, the vibration applier 12, for example, is a monomorph piezoelectric actuator provided with a metal plate and a piezoelectric element. The monomorph piezoelectric actuator is an actuator having a structure which bends with only one piezoelectric element layer. Note that the vibration applier 12 is not limited to being a piezoelectric actuator and may be an eccentric motor that produces vibrations by rotating an eccentric mass, a voice coil motor, or the like. Additionally, the vibration applier 12 may include a plurality of piezoelectric actuators or the like.

The piezoelectric element described above, for example, expands or contract in accordance with the drive signal S₂ output from the controller 16. Note that the drive signal S₂, as illustrated in FIG. 2C for example, is a sine wave, but is not limited thereto.

The vibration applier 12 has a structure that produces vibrations via the metal plate bending in response to the piezoelectric element expanding or contracting. The vibrations displace the operating surface 100 up and down from the reference position illustrated in FIG. 2A. The graph in FIG. 2C schematically shows an example of the displacement amount L of the operating surface 100 from the reference position. Note that the operating surface 100, for example, is set as the reference position.

Examples of the material of the piezoelectric element include lithium niobate, barium titanate, lead titanate, lead zirconate titanate (PZT), lead metaniobate, polyvinylidene fluoride (PVDF), and the like. The piezoelectric element is, for example, a laminated piezoelectric element formed from layers of film made by these materials.

The vibration applier 12, as illustrated in FIG. 2A for example, is centrally disposed on the back surface 101 of the panel 11. The period of vibration application T (from time ti to time t₂), which is a period of time during which the vibration applier 12 applies vibrations, is 120 ms, for example.

### Configuration of Acceleration Detector 14

The acceleration detector 14, for example, is an optical type acceleration sensor, a semiconductor type acceleration sensor, or the like. The acceleration detector 14, as illustrated in FIG. 2A, for example, is disposed on the back surface 101 of the panel 11.

The acceleration detector 14, as illustrated in FIG. 2A, is configured to detect acceleration associated with displacement of the operating surface 100 from the reference position. The acceleration detector 14 generates acceleration information S₃ that includes information on a detected acceleration value, and outputs the acceleration information S₃ to the controller 16.

### Configuration of Controller 16

The controller 16 includes a contact threshold value 160 for determining contact by the operating finger with the operating surface 100, and is configured to perform typical determinations as well as to determine a multi-tap operation by the operating finger on the operating surface 100 by comparing the acceleration value detected by the acceleration detector 14 and the contact threshold value 160 after the period of vibration application described above. The multi-tap operation is a double tap operation, for example.

Specifically, the controller 16 is, for example, a microcomputer including a central processing unit (CPU) that carries out computations, processes, and the like on acquired data in accordance with a stored program; a random access memory (RAM) and a read only memory (ROM) that are semiconductor memories; and the like. A program for operations of the controller 16 and the contact threshold value 160 described above, for example, are stored in the ROM. The RAM is used as a storage region that temporarily stores computation results and the like, for example.

The controller 16 controls the vibration applier 12 in accordance with the vibration instruction signal S₅ input from a connected electronic device to apply vibrations to the operating surface 100. The controller 16, as illustrated in FIG. 2C for example, generates the drive signal S₂ when the vibration instruction signal S₅ changes from Lo to Hi and outputs the drive signal S₂ to the vibration applier 12 to apply vibrations to the operating surface 100. The period during which vibrations are applied is the period of vibration application T described above. The period of vibration application T is equivalent to the period from time t₁, when the vibration instruction signal S₅ is changed from Lo to Hi, to time t₂.

The contact threshold value 160 is a threshold value for determining whether or not the operating finger is in contact with the operating surface 100. The contact threshold value 160 is compared to the acceleration value detected by the acceleration detector 14. Upon the operating finger being in contact with the operating surface 100, a load is applied to the operating surface 100. This load causes displacement of the operating surface 100. The acceleration detector 14 detects acceleration G associated with this displacement. FIG. 2C shows an example of the contact threshold value 160.

The controller 16 determines that the operating finger is in contact with the operating surface 100 when the detected acceleration value is equal to or greater than the contact threshold value 160. Additionally, the controller 16, for example, generates operation information S₄, which includes information on the detection point where the contact operation on the operating surface 100 has been performed, when the touch sensor 10 detects the operating finger and the acceleration value equal to or greater than the contact threshold value 160 is detected. The operation information S₄ is output to a connected electronic device.

The controller 16, for example, determines that a tap operation has been performed when the touch sensor 10 detects the operating finger and a pulse-like acceleration value equal to or greater than the contact threshold value 160 is detected once, and determines that a double tap operation has been performed when a tap operation is detected twice in succession.

When the operating surface 100 vibrates up and down from the reference position, the acceleration detector 14 detects acceleration G corresponding to these vibrations, as shown in FIG. 2C. When the vibrations are large, the detected acceleration G is large and may become equal to or greater than the contact threshold value 160 despite the operating finger not being in contact with the operating surface 100.

In light of this, the controller 16, as described above, is configured to discard the acceleration value detected during the period of vibration application T.

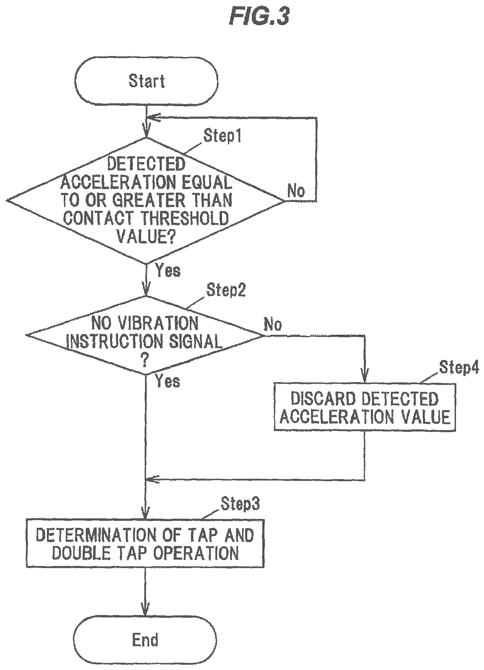

Examples of operations of the touch pad 1 of the present embodiment will be described below according to the flowchart illustrated in FIG. 3. Here, examples of operations up until determining whether to proceed to a determination of a tap and double tap operation will be explained. Determinations of other operations, for example, are performed after the determination of a tap and double tap operation.

### Operation

The controller 16 of the touch pad 1 acquires the detection information S₁ from the touch sensor 10 and acquires the acceleration information S₃ from the acceleration detector 14 when the power source of the vehicle 9 is on.

When "Yes" is true in Step 1 , i.e. when the acceleration G based on the acceleration information S₃ is equal to or greater than the contact threshold value 160, (Step 1: Yes), the controller 16 verifies whether the vibration instruction signal S₅ has been input, i.e. whether the vibration instruction signal S₅ is Hi.

When no vibration instruction signal S₅ has been input, i.e. when the vibration instruction signal S₅ is Lo (Step 2: Yes), the controller 16 determines that the operating finger is in contact with the operating surface 100, proceeds to the determination of a tap and double tap operation (Step 3), and thus terminates the process up until this determination.

In Step 2, when the vibration instruction signal S₅ has been input, i.e. when the vibration instruction signal S₅ is Hi (Step 2: No), the controller 16 discards an acceleration value because the value has been detected during the period of vibration application T (Step 4), and proceeds to the process of Step 3.

### Effect of Embodiments

The touch pad 1 according to the present embodiments can reduce occurrences of false determination of operations. Specifically, the touch pad 1 discards the acceleration value detected by the acceleration detector 14 during the period of vibration application T, in which vibrations are applied, even when the acceleration value is equal to or greater than the contact threshold value 160. Such a configuration can reduce occurrences of false determination caused by vibrations applied to the operating surface 100 as operational vibrations compared to a configuration without such a touch pad 1. With touch pad 1, the correctness of the determination of tap and double tap operations can be improved.

Although several embodiments of the present invention have been described above, these embodiments are merely examples and the scope of the invention is defined by the claims.

## Claims

1. A vibration presentation device (1) enabled to give feedback on operations in form of vibrations of an operating surface (100), comprising:
a touch detector (10) configured to detect coordinates of a detection point and to detect a tracing operation performed on the operating surface (100), the touch detector (10) being of an infrared or electrostatic capacitance type;
a vibration applier (12) configured to apply vibrations to the operating surface (100);
an acceleration detector (14) configured to detect contact with the operation surface (100) by determining acceleration (G) associated with displacement of the operating surface (100) for determining contact by a detection target with the operating surface (100); and
a controller (16) configured to discard an acceleration value detected by the acceleration detector (14) during a period of vibration application (T) in which the controller (16) controls the vibration applier (12) to apply vibrations to the operating surface (100),
wherein the controller (16) includes a contact threshold value (160) and determines that the detection target is in contact with the operating surface (100) if an acceleration value detected by the acceleration detector (14) is not less than the contact threshold value (160) when comparing the acceleration value detected by the acceleration detector (14) with the contact threshold value (160).

2. The device (1) according to claim 1, wherein the controller (16) is configured to determine that a multi-tap operation has been performed when the touch detector (10) detects the detection target and the acceleration value equal to or greater than the contact threshold value (160) is detected multiple times in succession.

3. The device (1) according to claim 1 or 2, wherein the controller (16) is configured to control the vibration applier (12) in accordance with an input vibration instruction signal (S5) to apply vibrations to the operating surface (100).

## Patentansprüche

1. Vibrationsdarstellungsvorrichtung (1), die in der Lage ist, eine Rückmeldung über Vorgänge in Form von Vibrationen einer Bedienoberfläche (100) zu geben, umfassend:
einen Berührungsdetektor (10), der so konfiguriert ist, dass er die Koordinaten eines Erfassungspunktes erfasst und eine auf der Bedienoberfläche (100) ausgeführte Abtastung erfasst, wobei der Berührungsdetektor (10) vom Typ Infrarot oder elektrostatische Kapazität ist;
einen Vibrationsapplikator (12), der so konfiguriert ist, dass er Vibrationen auf die Bedienoberfläche (100) ausübt;
einen Beschleunigungsdetektor (14), der so konfiguriert ist, dass er den Kontakt mit der Bedienoberfläche (100) erfasst durch Bestimmen der Beschleunigung (G), die mit der Verschiebung der Betriebsoberfläche (100) verbunden ist, um den Kontakt eines Erfassungsziels mit der Betriebsoberfläche (100) zu bestimmen; und
eine Steuerung (16), die so konfiguriert ist, dass sie einen von dem Beschleunigungsdetektor (14) erfassten Beschleunigungswert während einer Schwingungsanwendungsperiode (T) verwirft, in der die Steuerung (16) die Schwingungsanwendungsvorrichtung (12) so steuert, dass sie Schwingungen auf die Betriebsfläche (100) anwendet,
wobei die Steuerung (16) einen Kontaktschwellenwert (160) enthält und bestimmt, dass das Erfassungsziel in Kontakt mit der Betriebsfläche (100) ist, wenn ein von dem Beschleunigungsdetektor (14) erfasster Beschleunigungswert nicht kleiner als der Kontaktschwellenwert (160) ist, wenn der von dem Beschleunigungsdetektor (14) erfasste Beschleunigungswert mit dem Kontaktschwellenwert (160) verglichen wird.

2. Vorrichtung (1) nach Anspruch 1, wobei die Steuereinheit (16) so konfiguriert ist, dass sie feststellt, dass ein Multi-Tap-Vorgang durchgeführt wurde, wenn der Berührungsdetektor (10) das Erfassungsziel erfasst und der Beschleunigungswert, der gleich dem oder größer als der Kontaktschwellenwert (160) ist, mehrmals hintereinander erfasst wird.

3. Vorrichtung (1) nach Anspruch 1 oder 2, wobei die Steuerung (16) so konfiguriert ist, dass sie den Vibrationsapplikator (12) in Übereinstimmung mit einem eingegebenen Vibrationsanweisungssignal (S5) steuert, um Vibrationen auf die Bedienoberfläche (100) anzuwenden.

## Revendications

1. Un dispositif (1) de présentation de vibrations permettant de donner un retour d'informations sur des opérations sous forme de vibrations d'une surface d'actionnement (100), comprenant :
un détecteur tactile (10) configuré pour détecter des coordonnées d'un point de détection et pour détecter une opération de tracé effectuée sur la surface d'actionnement (100), le détecteur tactile (10) étant de type à capacité électrostatique ou infrarouge ;
un applicateur de vibrations (12) configuré pour appliquer des vibrations à la surface d'actionnement (100) ;
un détecteur d'accélération (14) configuré pour détecter un contact avec la surface d'actionnement (100) en déterminant une accélération (G) associée au déplacement de la surface d'actionnement (100) pour déterminer le contact par une cible de détection avec la surface d'actionnement (100) ; et
un contrôleur (16) configuré pour rejeter une valeur d'accélération détectée par le détecteur d'accélération (14) pendant une période d'application de vibrations (T) dans laquelle le contrôleur (16) commande l'applicateur de vibrations (12) pour appliquer des vibrations à la surface d'actionnement (100),
le contrôleur (16) comprenant une valeur de seuil de contact (160) et déterminant que la cible de détection est en contact avec la surface d'actionnement (100) si une valeur d'accélération détectée par le détecteur d'accélération (14) n'est pas inférieure à la valeur de seuil de contact (160) lors de la comparaison de la valeur d'accélération détectée par le détecteur d'accélération (14) avec la valeur de seuil de contact (160).

2. Le dispositif (1) selon la revendication 1, dans lequel le contrôleur (16) est configuré pour déterminer qu'une opération multi-tapotements a été effectuée lorsque le détecteur tactile (10) détecte la cible de détection et que la valeur d'accélération égale ou supérieure à la valeur de seuil de contact (160) est détectée plusieurs fois de suite.

3. Le dispositif (1) selon la revendication 1 ou la revendication 2, dans lequel le contrôleur (16) est configuré pour commander l'applicateur de vibrations (12) conformément à un signal d'instruction de vibration d'entrée (S5) pour appliquer des vibrations à la surface d'actionnement (100).
